# EUROPEAN PATENT APPLICATION

(11) **EP 4 675 407 A1**
(43) Date of publication of application: **07.01.2026**
(21) Application number: 25181836.5
(22) Date of filing: 10.06.2025
(51) Int. Cl.: G06F 3/041, G06F 3/0354, G06F 3/04842, G06F 3/0486, G06F 3/04883

(54) **INFORMATION PROCESSING APPARATUS AND CONTROL METHOD**

(30) Priority: 04.07.2024 JP 2024108129
(71) Applicant: Lenovo (Singapore) Pte. Ltd., New Tech Park 556741 (SG)
(72) Inventor: NOMURA, Ryohta, Yokohama-shi, 220-0012 (JP); SUZUKI, Yoshitsugu, Yokohama-shi, 220-0012 (JP); YOSHITOMI, Keiichi, Yokohama-shi, 220-0012 (JP); YAMAZAKI, Mitsuhiro, Yokohama-shi, 220-0012 (JP)
(74) Representative: Openshaw & Co.

(57) **Abstract**

There is provided an information processing apparatus to increase the operability of an operation of selecting an object on a screen with a pen. The information processing apparatus includes: a display unit; a touch sensor unit arranged on a screen of the display unit and capable of detecting at least a position of a pen that comes into contact with the screen; a pen input processing unit that outputs pen input information based on the position of the pen detected by the touch sensor unit to an OS; and a pen input adjustment unit that adjusts the position of the pen to the position of the object and outputs the position to the pen input processing unit when the touch sensor unit detects the contact of the pen at a position within the peripheral allowable range set around the object on the screen.

## Description

### BACKGROUND OF THE INVENTION

### Field of the Invention

The present invention relates to an information processing apparatus and a control method.

### Description of the Related Art

Recently, there are known some information processing apparatuses each using an electronic pen to perform operations equivalent to those of a mouse (refer to, for example, International Publication No. 2015/079861). In these information processing apparatuses, for example, when performing a drag operation, a user selects an object to be manipulated on the screen by bringing the tip of the electronic pen into contact with the screen, and then moves the object by moving the pen tip (a first conventional method).

In order to select a small object with this method, however, it is necessary to maintain the exact vertical and horizontal positions of the pen tip while keeping the pen tip in contact with the screen, which is a difficult operation, especially for novice users. This difficulty in operability is caused by a fact that, unlike the mouse, the electronic pen performs both positioning and object determination with a single operation, the contact of the pen tip with the screen.

In addition, there is known an operation method (a second conventional method), in which the object is determined by placing the cursor on the target position and pressing a button provided on the side of the electronic pen, for example, when the electronic pen is not in contact with the screen but is near the screen (hovering state), in order to separate the positioning operation and the object determination operation by the electronic pen. In this method, positioning and object determination are able to be done in separate operations.

Furthermore, there has been proposed another method (a third conventional method), in which the object is determined when the writing pressure of the pen tip exceeds a threshold value, instead of the object determination being performed only by the contact of the pen tip with the screen.

In the second conventional method described above, however, the electronic pen is kept in a hovering state where positioning and object determination are able to be performed by different operations. Therefore, there are more operation steps involved than with the conventional method of bringing the pen tip into contact with the screen described above, and further the action of pressing a button while maintaining the cursor position during hovering is also difficult for novice users. Furthermore, the second conventional method requires a learning burden because it is different from the conventional operation method.

Moreover, also in the second conventional method described above, positioning and object determination are able to be separated from each other, but since it is necessary to control the writing pressure, this is also a difficult operation for novice users, and since it is different from the conventional operation method, a learning burden increases.

In addition, in the first and second conventional methods described above, for example, when dragging a corner of a window to change the window frame of a display screen, it is necessary to pressing the button of the electric pen while precisely specifying the corner or edge of the window with the electronic pen or in a hovering state. Therefore, it is difficult to perform the drag operation that requires high accuracy. In the third conventional method described above, in the case of a drag operation by contact pressure, it is difficult to control the pressure with the pen, and similarly, it is difficult to perform a drag operation that requires high accuracy.

Thus, in the conventional information processing apparatus, there are cases in which it is difficult to select an object by an electronic pen such as, for example, in a drag operation.

The present invention has been made to solve the above problems. Therefore, an object of the present invention is to provide an information processing apparatus and a control method capable of increasing the operability of an operation of selecting an object on the screen with a pen.

### SUMMARY OF THE INVENTION

To solve the above problems, there is provided an information processing apparatus according to the first aspect of the present invention including: a display unit; a touch sensor unit arranged on a screen of the display unit and capable of detecting at least a position of a pen that comes into contact with the screen; a pen input processing unit that outputs pen input information based on the position of the pen detected by the touch sensor unit to an OS; and a pen input adjustment unit that adjusts the position of the pen to the position of an object and outputs the position to the pen input processing unit when the touch sensor unit detects the contact of the pen at a position within the peripheral allowable range set around the object on the screen.

Furthermore, in the information processing apparatus according to the first aspect of the present invention, the pen input adjustment unit may adjust the position of the pen in a click operation made by the contact of the pen at the position within the peripheral allowable range to the position of the object, and then in the case where the contact of the pen is detected continuously, the pen input adjustment unit may output the position of the pen to the pen input processing unit. The pen input processing unit may drag the object after the detection of the click operation to move the position of the object to the position of the pen output from the pen input adjustment unit.

Moreover, the information processing apparatus according to the first aspect of the present invention may further include a range determination processing unit that acquires the position of the object when the touch sensor unit detects the contact of the pen and then determines whether the contact position of the pen is included within the peripheral allowable range based on the acquired position of the object, and the pen input adjustment unit may adjust the position of the pen in the click operation made by the contact of the pen to the position of the object and output the position to the pen input processing unit when the range determination processing unit determines that the contact of the pen is included within the peripheral allowable range.

Moreover, in the information processing apparatus according to the first aspect of the present invention, the range determination processing unit may output a control instruction to the pen input adjustment unit, the control instruction being used for adjusting the position of the pen in the click operation to the position of the object, when the contact position of the pen is included within the peripheral allowable range.

Further, in the information processing apparatus according to the first aspect of the present invention, the object may be a corner or an edge of the display window.

Still further, the information processing apparatus according to the first aspect of the present invention may further include a display processing unit that displays display information including the object on the display unit, and the display processing unit may display display information that makes the peripheral allowable range visible on the display unit when the pen is detected to be in a hovering state in which the pen is in a non-contact state and approaches an area within the threshold distance on the screen of the display unit at the position within the peripheral allowable range.

In addition, according to the second aspect of the present invention, there is provided a control method for an information processing apparatus that includes: a display unit; a touch sensor unit arranged on a screen of the display unit and capable of detecting at least a position of a pen that comes into contact with the screen; a pen input processing unit that outputs pen input information based on the position of the pen detected by the touch sensor unit to an OS, the control method including: a first step of a pen input adjustment unit adjusting the position of the pen in a click operation made by the contact of the pen to a position of an object and outputting the position to the pen input processing unit when the touch sensor unit detects the click operation at a position within a peripheral allowable range set around the object on the screen; and a second step of the pen input processing unit dragging the object based on the position of the pen in the click operation adjusted in the first step.

The above-described aspects of the present invention can increase the operability of an operation of selecting an object on the screen with a pen.

### BRIEF DESCRIPTION OF THE DRAWINGS

FIG. 1 is an external view illustrating an example of a laptop PC according to a first embodiment.
FIG. 2 is a diagram illustrating an example of a main hardware configuration of the laptop PC according to the first embodiment.
FIG. 3 is a block diagram illustrating an example of a functional configuration of the laptop PC according to the first embodiment.
FIG. 4 is a first diagram for describing an example of an action of the laptop PC according to the first embodiment.
FIG. 5 is a second diagram for describing an example of an action of the laptop PC according to the first embodiment.
FIG. 6 is a third diagram for describing an example of an action of the laptop PC according to the first embodiment.
FIG. 7 is a diagram for describing an example of a drag operation with a pen on the laptop PC according to the first embodiment.
FIG. 8 is a flowchart illustrating an example of a drag operation with the pen on the laptop PC according to the first embodiment.
FIG. 9 is a first diagram for describing an example of an action of the laptop PC according to a second embodiment.
FIG. 10 is a second diagram for describing an example of an action of the laptop PC according to the second embodiment.
FIG. 11 is a flowchart illustrating an example of actions of the laptop PC according to the second embodiment.

### DETAILED DESCRIPTION OF THE INVENTION

Hereinafter, an information processing apparatus and a control method according to one embodiment of the present invention are described with reference to drawings.

### [First embodiment]

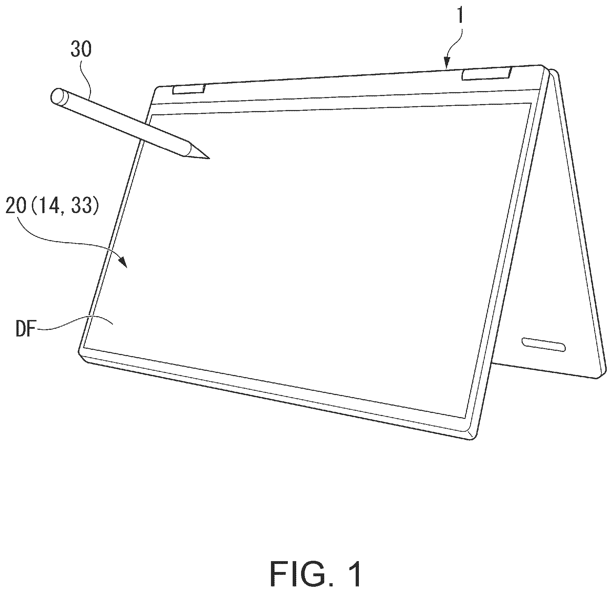

FIG. 1 is an external view illustrating an example of a laptop PC according to a first embodiment.

As illustrated in FIG. 1, the laptop PC 1 has a touch screen 20 that allows an input with a pen 30. Note that the laptop PC 1 is an example of an information processing apparatus in this embodiment.

The laptop PC 1 is allowed to be used as a tent-mode terminal that allows both pen input using the pen 30 and touch input using fingers or the like, by folding the screen (display surface) of a display unit 14 face up.

The touch screen 20 has the display unit 14 and a touch sensor unit 33.

The display unit 14 is, for example, a liquid crystal display or an electro-luminescence (EL) display, and displays various information in accordance with information processing of the laptop PC 1. The display unit 14 is configured as a part of the touch screen 20.

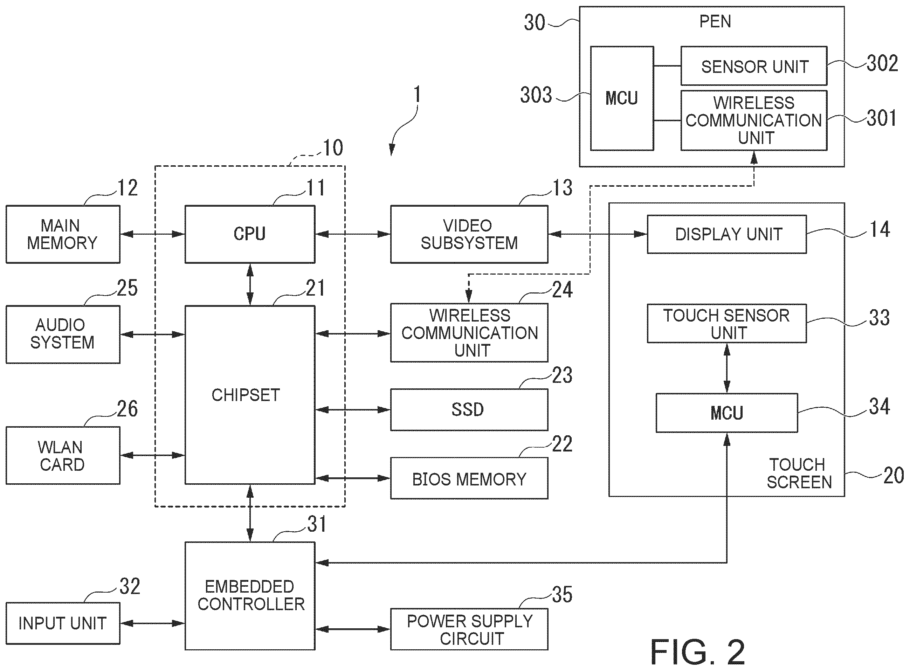

The following describes the main hardware configuration of the laptop PC 1 with reference to FIG. 2. FIG. 2 is a diagram illustrating an example of the main hardware configuration of the laptop PC 1 according to the first embodiment.

The laptop PC 1 is an information processing apparatus with an operating system (OS) of Windows (registered trademark). The laptop PC 1 is allowed to be used in the form of a normal laptop PC, the form of a tablet terminal, or a tent-mode form as illustrated in FIG. 1.

As illustrated in FIG. 2, the laptop PC includes a central processing unit (CPU) 11, a main memory 12, a video subsystem 13, a chipset 21, a basic input output system (BIOS) memory 22, an SSD 23, a wireless communication unit 24, an audio system 25, a wireless local area network (WLAN) card 26, a pen 30, an embedded controller 31, an input unit 32, a touch sensor unit 33, a micro controller unit (MCU) 34, and a power supply circuit 35.

The CPU 11 performs various arithmetic operations under program control to control the entire laptop PC 1.

The main memory 12 is a writable memory that is used as a read area for the execution program of the CPU 11 or as a work area for writing processing data of the execution program. The main memory 12 is made up of, for example, multiple dynamic random access memory (DRAM) chips. This execution program includes the OS, various device drivers for hardware operation of peripheral devices, various services/utilities, application programs (application software), and the like.

The video subsystem 13, which is a subsystem for implementing functions related to image display, includes a video controller. The video controller processes a drawing instruction from the CPU 11, writes processed drawing information into a video memory, reads the drawing information from the video memory, and outputs the drawing information as drawing data (display data) to the display unit 14.

The display unit 14, which is a main display unit of the laptop PC 1, displays a display screen based on the drawing data (display data) output from the video subsystem 13. As illustrated in FIG. 1 in the above, the display unit 14 is configured as a part of the touch screen 20.

The chipset 21 has controllers for a universal serial bus (USB), a serial AT attachment (ATA), a serial peripheral interface (SPI) bus, a peripheral component interconnect (PCI) bus, a PCI-Express bus, a low pin count (LPC) bus, and the like, and multiple devices are connected thereto. In FIG. 2, as examples of devices, the BIOS memory 22, the SSD 23, the wireless communication unit 24, the audio system 25, the WLAN card 26, and the embedded controller 31 are connected to the chipset 21.

The BIOS memory 22 is composed of an electrically rewritable nonvolatile memories such as an electrically erasable programmable read only memory (EEPROM) and a flash ROM, for example. The BIOS memory 22 stores system firmware for controlling the BIOS, the embedded controller 31, and the like.

A solid state drive (SSD) 23 (an example of a nonvolatile memory) stores an OS, various drivers, various services/utilities, application programs (hereinafter, referred to as "applications" in some cases), and various data.

The wireless communication unit 24 is, for example, a Bluetooth (registered trademark) module, and performs wireless communication between the laptop PC 1 and the pen 30.

The audio system 25 records, plays back, and outputs sound data.

The WLAN card 26 connects to a network via a wireless LAN to perform data communication. The WLAN card 26, for example, generates an event trigger indicating that data is received when data is received from the network.

The embedded controller 31 is a one-chip microcomputer that monitors and controls various devices (peripheral devices, sensors, and the like) regardless of the system state of the laptop PC **1.** The embedded controller 31 also has a power management function that controls the power supply circuit 35. In addition, the embedded controller 31 is composed of a CPU, a ROM, a RAM, and the like that are not illustrated, and includes multiple-channel A/D input terminals, D/A output terminals, timers, and digital input/output terminals. The embedded controller 31 is connected to, for example, the input unit 32, the touch sensor unit 33 via the MCU 34, and the power supply circuit 35 through these input/output terminals, and the embedded controller 31 controls the actions thereof.

The input unit 32 is an input device for a power switch, a pointing device, or a keyboard, for example.

The power supply circuit 35 includes, for example, a DC/DC converter, a charging/discharging unit, a battery unit, and an AC/DC adapter, and converts the direct current voltage supplied from the AC/DC adapter or the battery unit into multiple voltages necessary for causing the actions of the laptop PC 1. The power supply circuit 35 also supplies power to each part of the laptop PC 1 on the basis of the control from the embedded controller 31.

The touch sensor unit 33 is arranged on the screen of the display unit 14 (on the display screen DF) and is capable of detecting at least the position of the pen 30 that comes into contact with the screen. In addition to detecting the contact of the pen 30, the touch sensor unit 33 may also be capable of detecting, for example, a hovering state in which the pen 30 is in a non-contact state and approaches an area within a threshold distance on the screen of the display unit 14 (on the display screen DF). The touch sensor unit 33 is connected to the embedded controller 31 via the MCU 34.

The MCU 34 is a controller that includes a CPU and memories such as a ROM and a RAM, and controls touch sensor unit 33. The MCU 34 outputs pen signals including the position of the pen 30 detected by the touch sensor unit 33 to the CPU 11 and the chipset 21 (a main control unit 10 described later) via the embedded controller 31.

The pen 30 is a pen-shaped operating medium such as, for example, a touch pen or a stylus pen. The pen 30 is capable of communicating with the laptop PC 1 via wireless communication, and transmits information, such as the approach of the pen 30 to the display screen DF and the angle of the pen 30, to the laptop PC 1. The pen 30 includes a wireless communication unit 301, a sensor unit 302, and an MCU 303.

The wireless communication unit 301 is, for example, a Bluetooth (registered trademark) module, and performs wireless communication between the laptop PC 1 and the pen 30. The wireless communication unit 301 performs wireless communication with the wireless communication unit 24 of the laptop PC 1.

The sensor unit 302 is a sensor that detects, for example, the contact pressure of the pen 30 on the display screen DF, the angle of the pen 30, the approach of the pen 30 to the display screen DF, and the like. The sensor unit 302 outputs the detection information, which has been detected, to the MCU 303. The detection information detected by the sensor unit 302 is transmitted to the laptop PC 1 via the wireless communication unit 301.

The MCU 303 includes a CPU, memories such as a ROM and a RAM, I/O-related components, and the like, and controls the pen 30 in a comprehensive manner. The MCU 303 transmits various information about the pen 30 and the like, to the laptop PC 1 via the wireless communication unit 301.

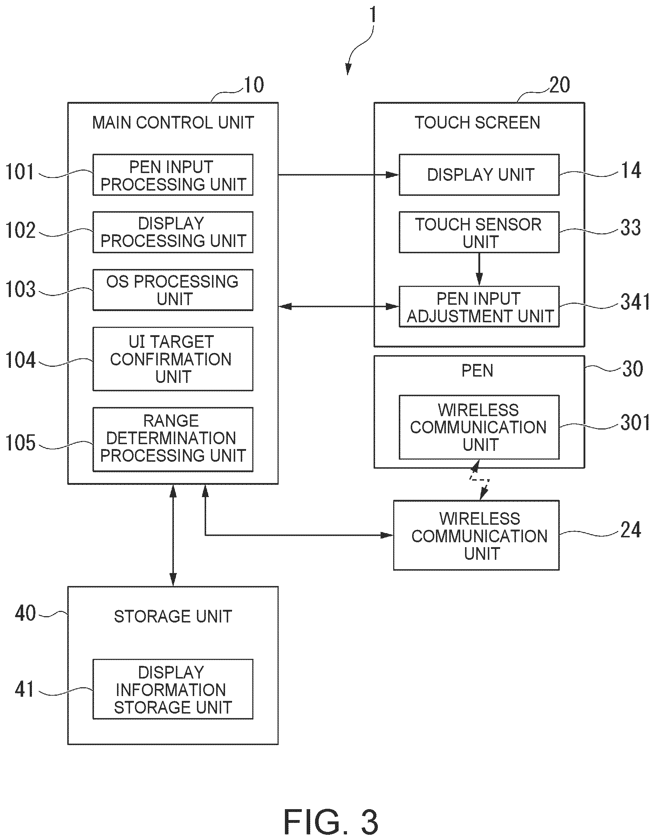

Subsequently, referring to FIG. 3, the functional configuration of the laptop PC 1 according to the present embodiment will be described.

FIG. 3 is a block diagram illustrating an example of the functional configuration of the laptop PC according to this embodiment. As illustrated in FIG. 3, the laptop PC 1 includes the main control unit 10, the touch screen 20, the wireless communication unit 24, the pen 30, and a storage unit 40.

The storage unit 40, which is implemented by the main memory 12 or the SSD 23, for example, stores various information used by the laptop PC 1. The storage unit 40 temporarily stores, for example, various information used by various applications, input information (pen input detection data, touch input detection data, and the like) acquired using the touch sensor unit 33, and display information to be displayed on the display unit 14. In addition, the storage unit 40 stores various setting information for the OS.

The storage unit 40 includes a display information storage unit 41.

The display information storage unit 41 stores, for example, display information displayed on the display screen DF of the display unit 14. The display information includes display information of the application window (display window) and is used to detect a user interface (UI) object that is an object for an operation of dragging a corner or an edge of an application window.

The main control unit 10, which is a functional unit that is implemented by the CPU 11 and the chipset 21 executing the programs stored in the main memory 12, executes various processes based on the OS. The main control unit 10 performs various processes using the touch input detection data detected by the touch screen 20 (touch sensor unit 33) and pen input detection data as input information, for example.

The main control unit 10 includes a pen input processing unit 101, a display processing unit 102, an OS processing unit 103, a UI target confirmation unit 104, and a range determination processing unit 105.

The pen input processing unit 101 is, for example, a device driver for using the pen 30, and outputs pen input information based on the position of the pen 30 detected by the touch sensor unit 33 to the OS. The pen input processing unit 101 outputs, for example, detection information on contact with the display screen DF of the pen 30, contact position information, contact pressure, angle information of the pen 30, detection information on the hovering state of the pen 30, hovering position information, and the like to the OS.

The display processing unit 102 is, for example, a device driver that controls the display to the display unit 14. The display processing unit 102, for example, displays various display information including UI target parts on the display unit 14, and displays display information that has been changed in response to an operation (for example, a click operation, a drag operation, or the like) using the pen 30 on the display unit 14.

The OS processing unit 103 mainly performs processing based on the OS. The OS processing unit 103 performs various information processing on the basis of the input information by the pen 30 output from the pen input processing unit 101, and outputs the output information (display information) based on the information processing to the display processing unit 102 to display the output information on the display unit 14.

The UI target confirmation unit 104, which is a functional unit implemented by dedicated software, confirms UI objects that are present on the display screen DF of the display unit 14. The UI objects are, for example, the corners, the edges, the title bar, and the like of a display window. The UI target confirmation unit 104 detects UI objects on the basis of display information stored in the display information storage unit 41, and acquires the position information of the detected UI objects. The UI target confirmation unit 104 provides the information on the confirmed (detected) UI target parts to, for example, the range determination processing unit 105.

In the case where multiple display windows are displayed superimposed, the UI target confirmation unit 104 detects the UI object displayed on the topmost layer and acquires the position information of the detected UI object.

The range determination processing unit 105 is a device driver for a custom human interface device (HID). When the touch sensor unit 33 detects contact with the pen 30, the range determination processing unit 105 acquires the position of the UI object from the UI target confirmation unit 104 and determines whether the contact position of the pen 30 is included within the peripheral allowable range based on the position of the acquired UI object.

When acquiring the position information (pen information) of the pen 30 that comes into contact with the display screen DF from a pen input adjustment unit 341, which is described later, the range determination processing unit 105 acquires the position information of the current UI object from the UI target confirmation unit 104. The range determination processing unit 105 sets a peripheral allowable range on the basis of the position information of the UI object, and determines whether the contact position (click position) of the pen 30 is included within the peripheral allowable range.

When the contact position of the pen 30 is within the peripheral allowable range of the UI object, the range determination processing unit 105 transmits a position adjustment command (an example of a control instruction), which is used to adjust the position of the pen 30, to the pen input adjustment unit 341. In other words, when the contact position of the pen 30 is within the peripheral allowable range, the range determination processing unit 105 outputs a position adjustment command (control instruction), which is used to adjust the position of the pen 30 in the click operation to the position of the UI object, to the pen input adjustment unit 341.

In addition, when the contact position of the pen 30 is not within the peripheral allowable range of the UI object, the range determination processing unit 105 may transmit a command indicating that the position of the pen 30 is not to be adjusted (such as a no adjustment required command) to the pen input adjustment unit 341.

The touch screen 20 includes the display unit 14, the touch sensor unit 33, and the pen input adjustment unit 341.

The touch sensor unit 33 detects, for example, a click operation made by the contact of the pen 30 with the display screen DF.

The pen input adjustment unit 341 is a functional unit that is implemented by causing the MCU 34 to execute the control program contained in the built-in ROM or RAM. When the touch sensor unit 33 detects the contact of the pen 30 at a position within the peripheral allowable range set around the UI object on the screen, the pen input adjustment unit 341 adjusts the position of the pen 30 to the position of the UI object and outputs the position to the pen input processing unit 101. In other words, when the touch sensor unit 33 detects a contact operation (for example, a click operation) made by the contact of the pen 30 at a position within the peripheral allowable range, the pen input adjustment unit 341 adjusts the position of the pen 30 in the contact operation (for example, a click operation) to the position of the UI object and outputs the position to the pen input processing unit 101.

For example, when the touch sensor unit 33 detects a click operation, the pen input adjustment unit 341 transmits the position information of the click operation to the range determination processing unit 105. Then, when receiving a position adjustment command from the range determination processing unit 105, the pen input adjustment unit 341 adjusts the position of the pen 30 in the click operation to the position of the UI object and outputs the position to the pen input processing unit 101. In other words, when the range determination processing unit 105 determines that the peripheral allowable range contains the position of the contact of the pen 30, the pen input adjustment unit 341 adjusts the position of the pen 30 in the click operation to the position of the UI object and outputs the position to the pen input processing unit 101.

For example, when a predetermined period of time has elapsed since the pen input adjustment unit 341 transmits the position information of the click operation to the range determination processing unit 105, or when the pen input adjustment unit 341 has received a command indicating that the position of the pen 30 is not to be adjusted (no adjustment required command or the like) from the range determination processing unit 105, the pen input adjustment unit 341 outputs the position of the pen 30 in the click operation directly (without adjustment) to the pen input processing unit 101.

In addition, in the case where the contacts of the pen 30 are detected consecutively after the position of the pen 30 in the click operation is adjusted to the position of the UI object, the pen input adjustment unit 341 outputs the position of the pen 30 to the pen input processing unit 101 to cause the execution of a drag operation. In this case, after detecting the click operation, the pen input processing unit 101 drags the UI object to move the position of the UI object to the position of the pen 30 output from the pen input adjustment unit 341.

Subsequently, the actions of the laptop PC 1 according to this embodiment are described with reference to the drawings.

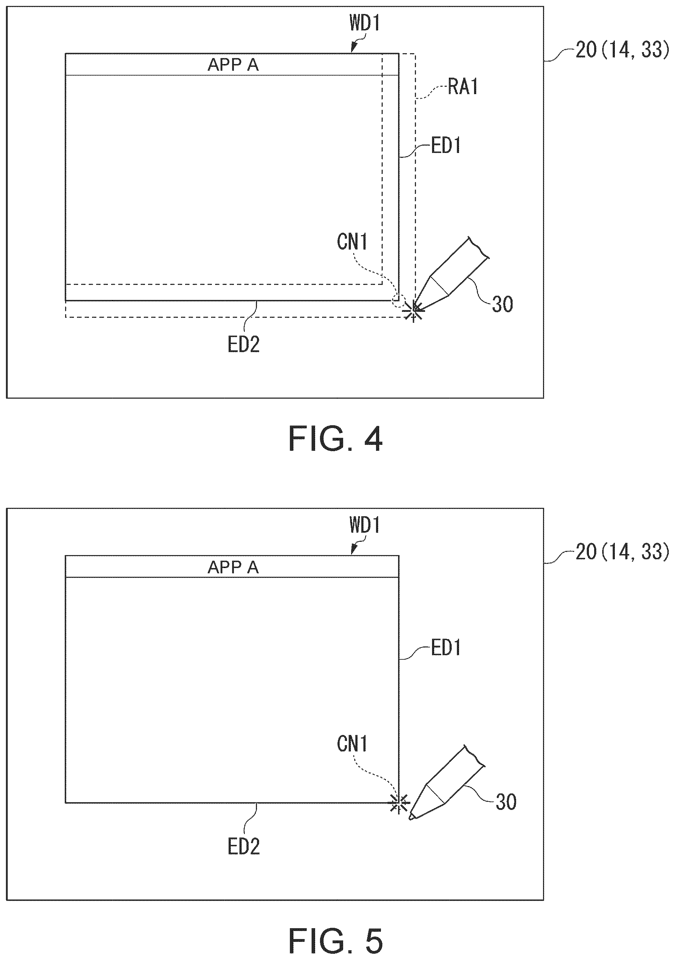

FIGS. 4 to 6 are diagrams for describing examples of actions of the laptop PC according to this embodiment.

In FIG. 4, a window WD1 indicates the display window of "app A." Moreover, a corner CN1 indicates the lower-right corner of the window WD1, and an edge ED1 indicates the right-side edge of the window WD1. In addition, an edge ED2 indicates the lower edge of the window WD1.

Moreover, a range RA1 indicates a peripheral allowable range with the edge ED1, the corner CN1, and the edge ED2 as UI objects.

In the example illustrated in FIG. 4, the pen 30 is in contact with (clicking) a position within the range RA1 on the display screen DF, in the vicinity of the lower-right corner CN1 of the window WD1. In this state, the pen input adjustment unit 341 adjusts the position of the pen 30 in the click operation to the position of the corner CN1 and outputs the position to the pen input processing unit 101.

As a result, as illustrated in FIG. 5, the display processing unit 102 displays the click operation at the position of the corner CN1, and the OS processing unit 103 drags the corner CN1 with the pen 30.

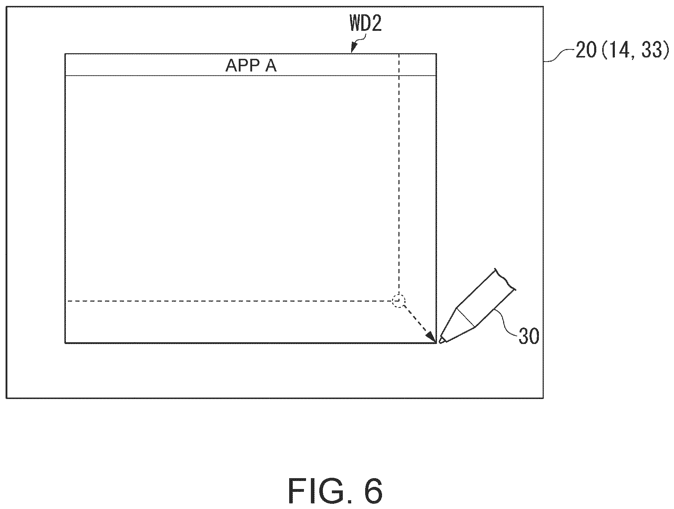

Then, when the pen 30 is moved while remaining in contact with the display screen DF as illustrated in FIG. 6, the display processing unit 102 moves the lower-right corner of the window WD1 to the contact position of the pen 30 as a drag operation, and displays the resizing of the window WD1. Thereby, the expanded window WD2 is resized with respect to the window WD1.

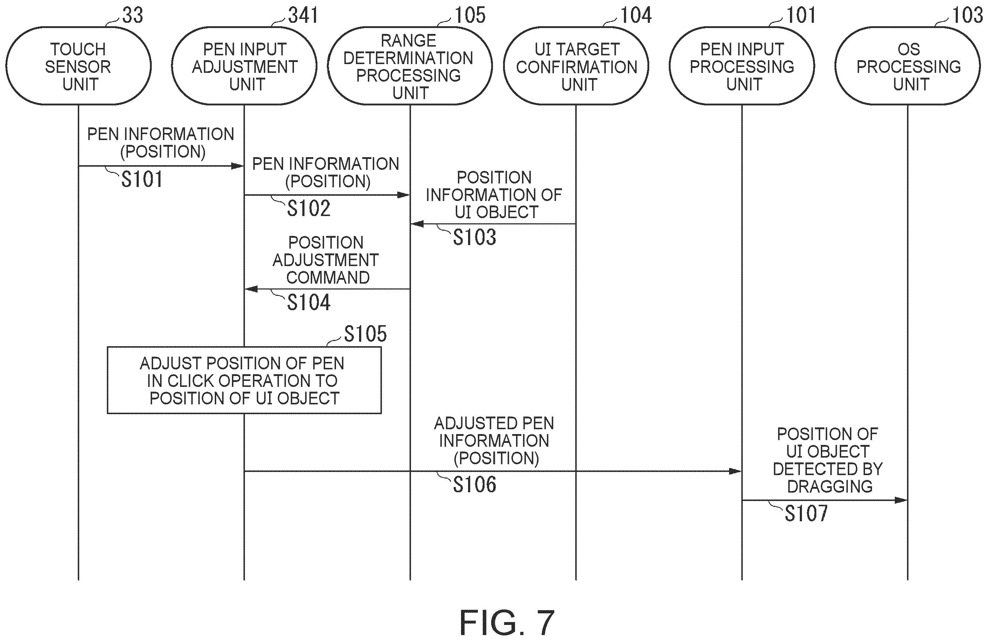

The following describes the adjustment processing for pen input on the laptop PC 1 according to this embodiment with reference to FIG. 7.

FIG. 7 is a diagram for describing an example of a drag operation with the pen 30 on the laptop PC according to this embodiment.

The process illustrated in FIG. 7 shows an example of the action taken when the pen 30 comes in contact with the screen (click) within the peripheral allowable range of a UI object.

As illustrated in FIG. 7, first, when the touch sensor unit 33 detects the contact (click) of the pen 30, the touch sensor unit 33 transmits pen information including the contact position of the pen 30 to the pen input adjustment unit 341 (step S101).

Next, the pen input adjustment unit 341 transmits pen information including the contact position of the pen 30 to the range determination processing unit 105 (step S102).

Then, the range determination processing unit 105 acquires the position information of the UI object from the UI target confirmation unit 104 (step S103). The UI target confirmation unit 104 detects the UI object on the basis of the display information stored in the display information storage unit 41, and outputs the position information of the detected UI object to the range determination processing unit 105.

Subsequently, the range determination processing unit 105 outputs a position adjustment command to the pen input adjustment unit 341 (step S104). The range determination processing unit 105 sets the peripheral allowable range of the UI object based on the position information of the UI object received from the UI target confirmation unit 104, and determines whether the contact position of the pen 30 is included within the peripheral allowable range of the UI object. In this specification, in order to describe an example of a case where the pen 30 makes contact with (clicks) the screen within the peripheral allowable range of the UI object, the range determination processing unit 105 outputs a position adjustment command to the pen input adjustment unit 341. The position adjustment command includes the position information of the UI object.

Next, the pen input adjustment unit 341 adjusts the position of the pen 30 in the click operation to the position of the UI object (step S105). The pen input adjustment unit 341 performs adjustment processing to replace the contact position of the pen 30 with the position of the UI object included in the position adjustment command in response to the position adjustment command.

Subsequently, the pen input adjustment unit 341 outputs the adjusted pen information to the pen input processing unit 101 (step S106). The pen input adjustment unit 341 outputs the pen information, which includes the position information of the UI object as the contact position of the pen 30, to the pen input processing unit 101.

Then, the pen input processing unit 101 outputs the position of the UI object as drag detection to the OS processing unit 103 (step S107). The pen input processing unit 101 detects the drag operation according to the adjusted pen information and outputs the drag operation to the OS processing unit 103, by which the OS processing unit 103 performs the drag operation of the UI object.

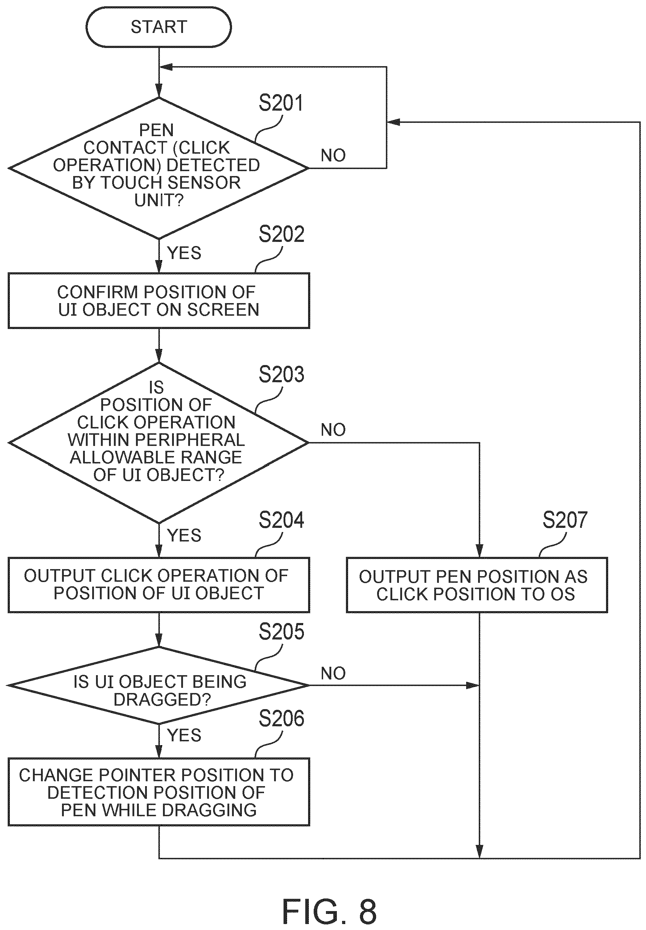

The following describes an example of the action of the drag operation of the laptop PC 1 according to the present embodiment, with reference to FIG. 8.

FIG. 8 is a flowchart illustrating an example of the drag operation with the pen 30 on the laptop PC 1 according to the present embodiment.

As illustrated in FIG. 8, the laptop PC 1 determines whether the touch sensor unit 33 has detected contact (click operation) of the pen 30 (step S201). The pen input adjustment unit 341 of the laptop PC 1 determines whether the touch sensor unit 33 has detected contact (click operation) of the pen 30. When the touch sensor unit 33 detects contact (click operation) with the pen 30 (step S201: YES), the pen input adjustment unit 341 proceeds to step S202. In addition, the pen input adjustment unit 341 returns to step S201 when the touch sensor unit 33 does not detect the contact (click operation) of the pen 30 (step S201: NO).

In step S202, the UI target confirmation unit 104 of the laptop PC 1 confirms the position of the UI object on the screen. The UI target confirmation unit 104 detects the UI object on the basis of the display information stored in the display information storage unit 41, and acquires the position information of the detected UI object.

Then, the range determination processing unit 105 of the laptop PC 1 determines whether the position of the click operation is within the peripheral allowable range of the UI object (step S203). The range determination processing unit 105 acquires the position information of the UI object from the UI target confirmation unit 104 and determines whether the position of the click operation is within the peripheral allowable range of the UI object. When the position of the click operation is within the peripheral allowable range of the UI object (step S203: YES), the range determination processing unit 105 proceeds to step S204. When the position of the click operation is not within the peripheral allowable range of the UI object (step S203: NO), the range determination processing unit 105 proceeds to step S207.

In step S204, the pen input processing unit 101 of the laptop PC 1 outputs the click operation of the position of the UI object to the OS (step S204). The pen input adjustment unit 341 adjusts the position of the click operation to the position of the UI object and outputs the position to the pen input processing unit 101. The pen input processing unit 101 outputs the position of the click operation adjusted by the pen input adjustment unit 341 to the OS processing unit 103. In addition, when a plurality of UI objects is present, the pen input adjustment unit 341 selects the UI object that is closest to the contact position of the pen 30.

Next, the pen input processing unit 101 determines whether the UI object is being dragged (step S205). The pen input processing unit 101 determines that the UI object is being dragged, for example, when the pen 30 is in contact with the screen continuously from the click operation. When the UI object is being dragged (step S205: YES), the pen input processing unit 101 proceeds to step S206. In addition, when the UI object is not being dragged (step S205: NO), the pen input processing unit 101 ends the drag operation and returns to step S201.

In step S206, the pen input processing unit 101 changes the pointer position to the detection position of the pen 30 while dragging. In this case, the display processing unit 102 changes the pointer position (position of the drag operation) to the contact position of the pen 30 and displays the pointer position on the display unit 14. The pen input processing unit 101 changes the pointer position (position of the drag operation) in response to the movement of the contact position of the pen 30. After processing in step S206, the pen input processing unit 101 returns to step S201.

As described above, the laptop PC 1 (information processing apparatus) according to this embodiment includes the display unit 14, the touch sensor unit 33, the pen input processing unit 101, and the pen input adjustment unit 341. The touch sensor unit 33 is arranged on the screen of the display unit 14 and is capable of detecting at least the position of the pen 30 that comes into contact with the screen. The pen input processing unit 101 outputs pen input information based on the position of the pen 30 detected by the touch sensor unit 33 to the OS. When the touch sensor unit 33 detects contact of the pen 30 at a position within the peripheral allowable range set around the UI object (object) on the screen, the pen input adjustment unit 341 adjusts the position of the pen 30 to the position of the UI object and outputs the position to the pen input processing unit 101. In other words, when the touch sensor unit 33 detects a contact operation (for example, a click operation) made by a contact of the pen 30 at a position within the peripheral allowable range, the pen input adjustment unit 341 adjusts the position of the pen 30 in the contact operation (for example, a click operation) to the position of the UI object and outputs the position to the pen input processing unit 101.

Thereby, the laptop PC 1 (information processing apparatus) according to the present embodiment is able to select a UI object by touching (clicking, for example) an area around the UI object with the pen 30, and therefore to increase the operability of the object selection operation on the screen with the pen 30. The laptop PC 1 according to the present embodiment does not require the hovering operation of the pen 30 and the button pressing operation, or pressure control by the pen 30, as in the first to third conventional methods described above, and therefore even a novice user is able to easily operate the laptop PC 1 without requiring special training.

In addition, the laptop PC 1 (information processing apparatus) according to the present embodiment is able to select a UI object by clicking an area around the UI object with the pen 30, and therefore enables, for example, a drag operation that requires high accuracy to be easily performed. Therefore, the laptop PC 1 according to the present embodiment is able to increase the operability of drag operations with the pen 30.

Furthermore, in the present embodiment, when a click operation is detected due to contact with the pen 30 at a position within the peripheral allowable range, the pen input adjustment unit 341 adjusts the position of the pen 30 in the click operation to the position of the UI object, and then when contact with the pen 30 is detected continuously, the pen input adjustment unit 341 outputs the position of the pen 30 to the pen input processing unit 101. After detecting the click operation, the pen input processing unit 101 drags the UI object to move the position of the UI object to the position of the pen 30 output from the pen input adjustment unit 341.

Thereby, the laptop PC 1 according to the present embodiment is able to perform the drag operation using the pen 30 more easily.

Furthermore, the laptop PC 1 according to the present embodiment includes a range determination processing unit 105. When the touch sensor unit 33 detects contact with the pen 30, the range determination processing unit 105 acquires the position of the UI object and determines whether the contact position of the pen 30 is included within the peripheral allowable range based on the acquired position of the UI object. When the range determination processing unit 105 determines that the position of the contact of the pen 30 is included within the peripheral allowable range, the pen input adjustment unit 341 adjusts the position of the pen 30 in the clock operation to the position of the UI object and outputs the position to the pen input processing unit 101.

Thereby, the laptop PC 1 according to the present embodiment, due to having the range determination processing unit 105, is able to easily determine whether the contact position of the pen 30 is within the peripheral allowable range of the UI object, with a simple configuration.

Moreover, in this embodiment, when the contact position of pen 30 is included within the peripheral allowable range, the range determination processing unit 105 outputs a control instruction for adjusting the position of the pen 30 in the click operation to the position of the UI object (position adjustment command) to the pen input adjustment unit 341.

Thereby, in the laptop PC 1 according to the present embodiment, the pen input adjustment unit 341 adjusts the position of the pen 30 to the position of the UI object in response to the control instruction (position adjustment command) from the range determination processing unit 105, and therefore the pen input adjustment unit 341 does not need to determine the peripheral allowable range, thereby enabling the configuration of the pen input adjustment unit 341 to be simplified.

Furthermore, in the present embodiment, the UI object is a corner or an edge of the display window.

Thereby, the laptop PC 1 according to the present embodiment is able to easily perform a drag operation on a corner or an edge of the display window, which requires high-accuracy position control of the pen 30, using only a click operation of the pen 30.

Moreover, the control method according to the present embodiment is a control method for a laptop PC 1 that includes a display unit 14, a touch sensor unit 33 that is arranged on the screen of the display unit 14 and is capable of detecting at least the position of a pen 30 that comes into contact with the screen, and a pen input processing unit 101 that outputs pen input information based on the position of the pen 30 detected by the touch sensor unit 33 to an operating system (OS), the method including a pen input adjustment step (first step) and a pen input processing step (second step). In the pen input adjustment step (first step), when a touch sensor unit 33 detects a click operation made by contact of the pen 30 at a position within the peripheral allowable range set around a UI object on the screen, a pen input adjustment unit 341 adjusts the position of the pen 30 in the click operation to the position of the UI object and outputs the position to the pen input processing unit 101. In the pen input processing step (second step), the pen input processing unit 101 drags the UI object, based on the position of the pen 30 in the click operation adjusted by the first step.

Thereby, the control method according to the present embodiment has the same effect as the laptop PC 1 described above, thereby enabling increase in the operability of selecting an object on the screen using the pen 30 (for example, the operability of a drag operation).

### [Second embodiment]

The following describes a laptop PC 1 according to a second embodiment referring to the drawings.

In the second embodiment, a variation in which the peripheral allowable range of the UI object described above is visualized by hovering of a pen 30.

In this embodiment, the basic hardware configuration and functional configuration are the same as those of the first embodiment illustrated in FIGS. 2 and 3 described above, and therefore the description thereof is omitted here.

Hereinafter, the processes that differ from those of the first embodiment are described in this embodiment.

In this embodiment, when there is detected a hovering state, in which the pen 30 approaches an area within a threshold distance on the screen of the display unit 14 in a non-contact state at a position within the peripheral allowable range, the display processing unit 102 displays display information that makes the peripheral allowable range visible on the display unit 14.

Note that, for example, the touch sensor unit 33 may detect the hovering state of the pen 30 or that a sensor unit 302 of the pen 30 may detect the hovering state and then the pen input processing unit 101 may acquire information indicating that the hovering state has been detected via a wireless communication unit 24.

The pen input processing unit 101 determines whether the position of the hovering state of the pen 30 is within the peripheral allowable range, for example, by using the range determination processing unit 105 when the hovering state of the pen 30 is detected, and causes the display processing unit 102 to display the display information that makes the peripheral allowable range visible on the display unit 14 in the case where the position in the hovering state is within the peripheral allowable range.

The following describes the actions of the laptop PC 1 according to the present embodiment with reference to the drawings.

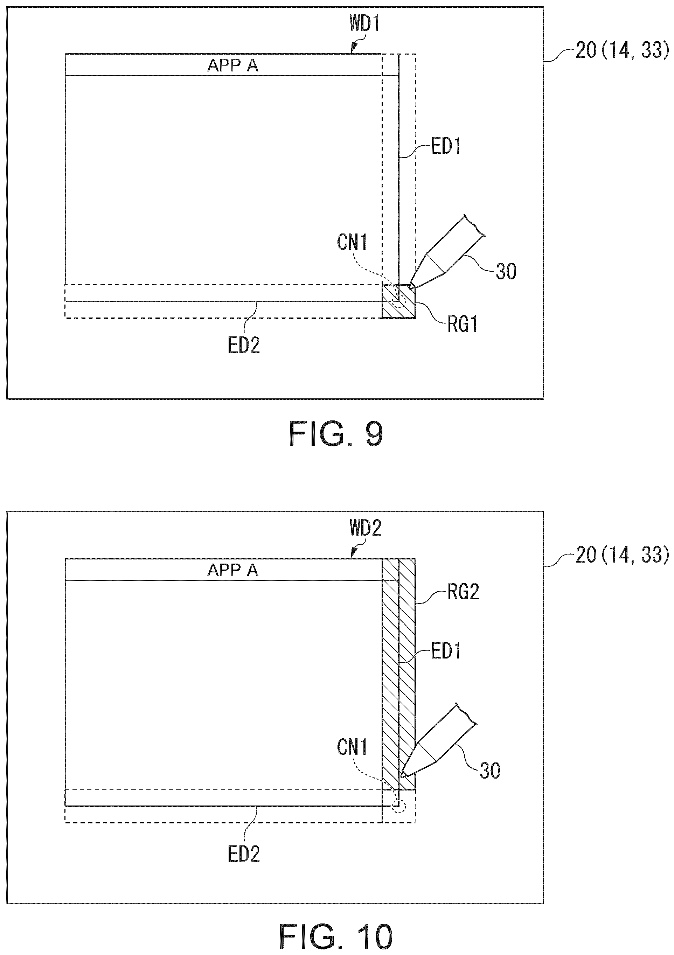

FIGS. 9 and 10 are diagrams for describing an example of actions of the laptop PC 1 according to the present embodiment.

The example illustrated in FIG. 9 shows an example of hovering the pen 30 in the vicinity of the lower-right corner CN1 of the window WD1.

As illustrated in FIG. 9, when the hovering state of the pen 30 is detected in the peripheral allowable range of the corner CN1, the pen input processing unit 101 causes the display processing unit 102 to perform display that visualizes the peripheral allowable range RG1, for example, by changing the display color or the like. Thereby, the display processing unit 102 causes the display unit 14 to display the display information (peripheral allowable range RG1) that makes the peripheral allowable range visible.

In addition, the example illustrated in FIG. 10 shows one case where the pen 30 is hovering around the right-side edge ED1 of the window WD1.

In this case, as illustrated in FIG. 10, when the hovering state of the pen 30 is detected in the peripheral allowable range of the edge ED1, the pen input processing unit 101 causes the display processing unit 102 to perform display that visualizes a peripheral allowable range RG2, for example, by changing the display color. Thereby, the display processing unit 102 causes the display unit 14 to display the display information (peripheral allowable range RG2) that makes the peripheral allowable range visible.

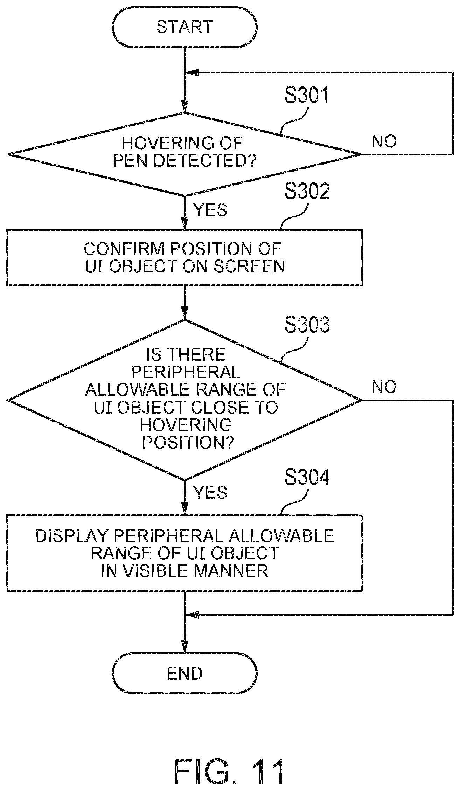

The following describes the details of the actions of the laptop PC according to the embodiment with reference to FIG. 11.

FIG. 11 is a flowchart illustrating an example of actions of the laptop PC 1 according to the present embodiment.

As illustrated in FIG. 11, the pen input processing unit 101 of the laptop PC 1 determines whether hovering of the pen 30 is detected (step S301). When hovering of the pen 30 is detected (step S301: YES), the pen input processing unit 101 proceeds to step S302. When hovering of the pen 30 is not detected (step S301: NO), the pen input processing unit 101 returns to step S301.

In step S302, the UI target confirmation unit 104 of the laptop PC 1 confirms the position of the UI object on the screen. The UI target confirmation unit 104 detects the UI object, based on the display information stored in the display information storage unit 41, and acquires the position information of the detected UI object.

Next, the range determination processing unit 105 of the laptop PC 1 determines whether there is a peripheral allowable range of the UI object close to the hovering position (step S303). The range determination processing unit 105 acquires the position information of the UI object from the UI target confirmation unit 104 and determines whether the position of the pen 30 in the hovering state is within the peripheral allowable range of the UI object. When there is the peripheral allowable range of the UI object close to the hovering position (step S303: YES), the range determination processing unit 105 proceeds to step S304. When there is no peripheral allowable range of the UI object close to the hovering position (step S303: NO), the range determination processing unit 105 terminates the processing.

In step S304, the laptop PC 1 displays the peripheral allowable range of the UI object in a visible manner. The pen input processing unit 101 causes the display processing unit 102 to display the peripheral allowable range of the UI object in a visible manner. In other words, the display processing unit 102 displays the display information in which the peripheral allowable range of the UI object is made visible on the display unit 14. After processing of step S304, the pen input processing unit 101 ends the processing.

In addition, the processing illustrated in FIG. 11 is to be performed periodically.

In addition, other actions of the processing that make the peripheral allowable range of the UI object described above visible are the same as those of the first embodiment, and therefore the description thereof is omitted here.

As described above, the laptop PC 1 of the present embodiment includes a display processing unit 102 that displays display information containing a UI object on the display unit 14. The display processing unit 102 displays display information that makes the peripheral allowable range visible on the display unit 14 when there is detected a hovering state in which the pen 30 approaches an area on the screen of the display unit 14 within a threshold distance in a non-contact state at a position within the peripheral allowable range.

As a result, the peripheral allowable range is made visible when the pen 30 approaches an area within the peripheral allowable range of the UI object, and therefore the laptop PC 1 according to the present embodiment makes it easier to click in the peripheral allowable range with the pen 30, thereby further increasing the operability of a selection operation (for example, the operability of a drag operation) of the object on the screen with the pen 30.

Furthermore, the present invention is not limited to the above embodiments, and may be modified within the scope of the present invention without departing from the spirit thereof.

For example, in the above embodiments, there has been described an example that the information processing apparatus is a laptop PC 1, but the information processing apparatus is not limited thereto, and may be, for example, a tablet terminal, a liquid crystal pen tablet, a smartphone, or any other information processing apparatus.

Furthermore, in the above embodiments, there has been described an example that the UI object is a corner or an edge of the display window, but the UI object is not limited thereto, and may be other portions such as, for example, the title bar of the display window.

Furthermore, the UI object may be pre-set with a priority such that a corner is selected before an edge.

Furthermore, in each of the above embodiments, there has been described an example that the OS of the laptop PC 1 is Windows (registered trademark), but the OS is not limited thereto, and any other OS such as Android (registered trademark) may also be applied.

In the above embodiments, there has been described an example that the touch screen 20 has the pen input adjustment unit 341, but the present invention is not limited thereto, and the main control unit 10 may have the pen input adjustment unit 341.

Furthermore, in the above embodiments, there has been described an example that the main control unit 10 has the UI target confirmation unit 104 and the range determination processing unit 105, but the present invention is not limited thereto, and either one or both of the UI target confirmation unit 104 and the range determination processing unit 105 may be provided in the touch screen 20. Furthermore, in this case, the main control unit 10 may be configured to periodically transmit the position information of the UI object to the touch screen 20.

In the above embodiments, the contact operation performed by the pen 30 has been described, but the present invention is not limited thereto, and the present invention may be applied, for example, to a contact operation performed by a finger.

Furthermore, each configuration of the laptop PC 1 described above includes a computer system internally. The program for implementing the functions of the respective configurations of the laptop PC 1 described above may be recorded on a computer-readable recording medium, and the program recorded on the recording medium may be loaded into the computer system and executed to perform the processing of each configuration of the laptop PC 1 described above. In this respect, "loading the program recorded on the recording medium into the computer system and executing the program" includes installing the program on the computer system. The term "computer system" here refers to a system including hardware such as an OS and peripheral devices.

Furthermore, the "computer system" may include a plurality of computer devices connected via a network including communication lines such as the Internet, WAN, LAN, dedicated lines or the like. Furthermore, "computer-readable recording medium" refers to portable media such as flexible disks, optical magnetic disks, ROM, CD-ROM, and storage devices such as hard disks built into a computer system. Thus, the recording medium on which the program is stored may be a non-transitory recording medium such as a CD-ROM.

Furthermore, the recording media include recording media located internally or externally that are accessible from a distribution server for distributing the program. Additionally, the program may be divided into a plurality of parts, downloaded at different times, and then combined in the respective configurations of the laptop PC 1, or the distribution servers for the respective divided programs may be different from each other. Furthermore, the term "computer-readable recording medium" includes volatile memory (RAM) or the like within a computer system that acts as a server or client when a program is transmitted via a network, which retains the program for a certain period of time. Furthermore, the above program may be designed to implement some of the aforementioned functions. Additionally, the above program may be one capable of implementing the aforementioned functions, in combination with programs already recorded in the computer system, such as so-called difference files (difference programs).

Furthermore, some or all of the aforementioned functions may be implemented as an integrated circuit such as an LSI (large scale integration). Each of the aforementioned functions may be implemented as a separate processor, or some or all of the functions may be integrated and implemented as a processor. Furthermore, the method of implementing the integrated circuit may not be limited to LSI, but may also be implemented using dedicated circuits or general-purpose processors. Additionally, in the case where new integration technologies emerge that can replace LSI due to advancements in semiconductor technology, the integrated circuits made by those technologies may also be used.

### Description of Symbols

- 1: laptop PC
- 10: main control unit
- 11: CPU
- 12: main memory
- 13: video subsystem
- 14: display unit
- 20: touch screen
- 21: chipset
- 22: BIOS memory
- 23: SSD
- 24, 301: wireless communication unit
- 25: audio system
- 26: WLAN card
- 30: pen
- 31: embedded controller
- 32: input unit
- 33: touch sensor unit
- 34,: 303 MCU
- 35: power supply circuit
- 40: storage unit
- 41: display information storage unit
- 101: pen input processing unit
- 102: display processing unit
- 103: OS processing unit
- 104: UI target confirmation unit
- 105: range determination processing unit
- 302: sensor unit
- 341: pen input adjustment unit
- DF: display screen

## Claims

1. An information processing apparatus comprising:
a display unit;
a touch sensor unit arranged on a screen of the display unit and capable of detecting at least a position of a pen that comes into contact with the screen;
a pen input processing unit that outputs pen input information based on the position of the pen detected by the touch sensor unit to an operating system; and
a pen input adjustment unit that adjusts the position of the pen to the position of an object and outputs the position to the pen input processing unit when the touch sensor unit detects the contact of the pen at a position within a peripheral allowable range set around the object on the screen.

2. The information processing apparatus according to claim 1, wherein:
the pen input adjustment unit adjusts the position of the pen in a click operation made by the contact of the pen when the click operation is detected at the position within the peripheral allowable range to the position of the object, and then in the case where the contact of the pen is detected continuously, the pen input adjustment unit outputs the position of the pen to the pen input processing unit; and
the pen input processing unit drags the object after the detection of the click operation to move the position of the object to the position of the pen output from the pen input adjustment unit.

3. The information processing apparatus according to claim 1 or 2, further comprising a range determination processing unit that acquires the position of the object when the touch sensor unit detects the contact of the pen and then determines whether the contact position of the pen is included within the peripheral allowable range based on the acquired position of the object,
wherein the pen input adjustment unit adjusts the position of the pen in the click operation made by the contact of the pen to the position of the object and outputs the position to the pen input processing unit when the range determination processing unit determines that the contact of the pen is included within the peripheral allowable range.

4. The information processing apparatus according to claim 3, wherein the range determination processing unit outputs a control instruction to the pen input adjustment unit, the control instruction being used for adjusting the position of the pen in the click operation to the position of the object, when the contact position of the pen is included within the peripheral allowable range.

5. The information processing apparatus according to any one of claims 1 to 4, wherein the object is a corner or an edge of the display window.

6. The information processing apparatus according to any one of claims 1 to 4, further comprising a display processing unit that displays display information including the object on the display unit,
wherein the display processing unit displays display information that makes the peripheral allowable range visible on the display unit when the pen is detected to be in a hovering state in which the pen is in a non-contact state and approaches an area within a threshold distance on the screen of the display unit at the position within the peripheral allowable range.

7. A control method for an information processing apparatus that includes: a display unit; a touch sensor unit arranged on a screen of the display unit and capable of detecting at least a position of a pen that comes into contact with the screen; and a pen input processing unit that outputs pen input information based on the position of the pen detected by the touch sensor unit to an operating system, the control method comprising:
a first step of a pen input adjustment unit adjusting the position of the pen in a click operation made by the contact of the pen to a position of an object and outputting the position to the pen input processing unit when the touch sensor unit detects the click operation at a position within a peripheral allowable range set around the object on the screen; and
a second step of the pen input processing unit dragging the object based on the position of the pen in the click operation adjusted in the first step.

8. The control method according to claim 7, further comprising:
adjusting the position of the pen in a click operation made by the contact of the pen when the click operation is detected at the position within the peripheral allowable range to the position of the object, and then in the case where the contact of the pen is detected continuously, and outputting the position of the pen; and
dragging the object after the detection of the click operation to move the position of the object to the position of the pen.

9. The control method according to claim 7 or 8, further comprising acquiring the position of the object when the contact of the pen is detected and then determining whether the contact position of the pen is included within the peripheral allowable range based on the acquired position of the object,
adjusting the position of the pen in the click operation made by the contact of the pen to the position of the object and outputting the position when the contact of the pen is determined to be included within the peripheral allowable range.

10. The control method according to claim 9, further comprising outputting a control instruction, the control instruction being used for adjusting the position of the pen in the click operation to the position of the object, when the contact position of the pen is included within the peripheral allowable range.

11. The control method according to any one of claims 7 to 10, wherein the object is a corner or an edge of the display window.

12. The control method according to any one of claims 7 to 10, further comprising displaying display information including the object on the display unit,
wherein display information that makes the peripheral allowable range visible on the display unit when the pen is detected to be in a hovering state in which the pen is in a non-contact state and approaches an area within a threshold distance on the screen of the display unit at the position within the peripheral allowable range.
